(19) Europäisches Patentamt
European Patent Office
Office européen des brevets

(11) **EP 2 711 761 B1**

(12) **EUROPÄISCHE PATENTSCHRIFT**

(45) Veröffentlichungstag und Bekanntmachung des Hinweises auf die Patenterteilung:
**18.11.2020   Patentblatt 2020/47**

(51) Int Cl.:
*G02B 27/00* (2006.01)   *G02B 17/08* (2006.01)
*G03B 21/20* (2006.01)   *H04N 9/31* (2006.01)
*G03B 21/28* (2006.01)   *G03B 21/00* (2006.01)
*G03B 21/14* (2006.01)   *G02B 26/08* (2006.01)
*H04N 5/74* (2006.01)

(21) Anmeldenummer: **13181974.0**

(22) Anmeldetag: **28.08.2013**

(54) **Projektionsvorrichtung**

Projection device

Dispositif de projection

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2012   DE 102012217329**

(43) Veröffentlichungstag der Anmeldung:
**26.03.2014   Patentblatt 2014/13**

(73) Patentinhaber: **Carl Zeiss Jena GmbH**
**07745 Jena (DE)**

(72) Erfinder:
• **Pretorius, Marco**
**73447 Oberkochen (DE)**

• **Rudolph, Günter**
**07743 Jena (DE)**
• **Geißler, Enrico**
**07749 Jena (DE)**
• **Nieten, Christoph**
**07745 Jena (DE)**

(74) Vertreter: **Patentanwälte Geyer, Fehners & Partner mbB**
**Perhamerstrasse 31**
**80687 München (DE)**

(56) Entgegenhaltungen:
**WO-A1-2004/102973    WO-A1-2008/068257**
**WO-A1-2009/156130    DE-A1-102008 029 787**
**US-A1- 2006 055 897**

**Beschreibung**

Die vorliegende Erfindung betrifft eine Projektionsvorrichtung mit einer ersten und einer zweiten Kippspiegelmatrix, einer Abbildungsoptik, die die erste Kippspiegelmatrix auf die zweite Kippspiegelmatrix abbildet und einer Projektionsoptik, die von der zweiten Kippspiegelmatrix reflektiertes Licht projiziert, um ein Bild zu erzeugen.

Bei solchen Projektionsvorrichtungen ist es zur Erzielung von guten Bildqualitäten beim projizierten Bild wesentlich, eine exakte und möglichst fehlerfreie Abbildung der ersten Kippspiegelmatrix auf die zweite Kippspiegelmatrix durchzuführen. Es hat sich jedoch gezeigt, daß selbst bei dem Einsatz von Abbildungsoptiken, die theoretisch eine äußerst genaue 1:1 Abbildung realisieren, immer noch Bildfehler auftreten.

Ausgehend hiervon ist es Aufgabe der Erfindung, eine Projektionsvorrichtung mit einer ersten und einer zweiten Kippspiegelmatrix, einer Abbildungsoptik, die die erste Kippspiegelmatrix auf die zweite Kippspiegelmatrix abbildet, und einer Projektionsoptik, die von der zweiten Kippspiegelmatrix reflektiertes Licht projiziert, um ein Bild zu erzeugen, so weiterzubilden, daß das projizierte Bild eine verbesserte Qualität aufweist.

Erfindungsgemäß wird die Aufgabe durch eine Projektionsvorrichtung nach Anspruch 1 gelöst.

Die Erfinder haben festgestellt, daß das schräge Durchlaufen der Deckgläser der Kippspiegelmatrizen zu unerwünschten Aberrationen bei der Abbildung mittels der Abbildungsoptik führen. So entstehen beim schrägen Durchlaufen der Deckgläser (bis auf Bildfehler höherer Ordnung) genau folgende Bildfehler: chromatische Vergrößerungsdifferenz, (Achs-)Koma, (Achs-)Astigmatismus und Verzeichnung. Alle diese Bildfehler bewirken, daß keine pixelgenaue Zuordnung zwischen der ersten und zweiten Kippspiegelmatrix mehr besteht bzw. daß eine unerwünschte laterale Ablage auf der zweiten Kippspiegelmatrix vorliegt. Dieser Effekt bewirkt, daß bei dem Einsatz von einer Abbildungsoptik, die eine hochgenaue 1:1-Abbildung durchführt, immer noch in unerwünschter Weise Bildfehler auftreten und die Falschlichtreduktion weniger perfekt funktioniert. Es ist auch nicht möglich, auf die Deckgläser zu verzichten und sie müssen eine erhebliche Dicke von typischerweise mehreren Millimetern aufweisen, da die Kippspiegel sich im Vakuum befinden und die Deckgläser dem Druckunterschied zwischen Normaldruck und Vakuum standhalten müssen.

Die Auswirkung der Bildfehler, die durch das schräge Durchlaufen der Deckgläser auftreten, auf die Bildgüte oder Qualität des projizierten Bildes kann wie folgt charakterisiert werden. Die fehlende pixelgenaue Zuordnung führt generell zu einer Kontrastverschlechterung in der Projektionsabbildung (im projizierten Bild). Dieser Fehler wird insbesondere bei Bildern mit hohen In-Bild-Kontrasten deutlich, da die Abweichung von der pixelgenauen Zuordnung in der Regel feldabhängig ist (inklusive Helligkeitsabfall zum Rand hin). Die chromatische Vergrößerungsdifferenz führt dazu, daß farbabhängig mehr oder weniger Streulicht in der Projektionsabbildung auftritt. Wegen der Feldabhängigkeit dieses Fehlers können sich hier zum Rand hin Farbsäume ergeben.

Durch Auffinden dieser Fehlerquelle des schrägen Durchlaufes der Deckgläser sowie durch das Vorsehen eines entsprechenden Korrekturelementes wird erfindungsgemäß eine Projektionsvorrichtung bereitgestellt, bei der das projizierte Bild eine verbesserte Qualität aufweist, da erfindungsgemäß alle angegebenen Bildfehler, die aufgrund des schrägen Durchlaufens der Deckgläser auftreten, gleichzeitig korrigiert bzw. vermindert werden können.

Bei der erfindungsgemäßen Projektionsvorrichtung kann die Relays-Optik eine optische Achse aufweisen, können die Mittelpunkte der Kippspiegel jeder Kippspiegelmatrix jeweils in einer DMD-Ebene liegen und können die Kippspiegelmatrizen so positioniert sein, daß die DMD-Ebenen mit der optischen Achse jeweils einen Winkel von ungleich 90° einschließen. Insbesondere können die beiden Kippspiegelmatrizen so positioniert sein, daß die beiden DMD-Ebenen zusammenfallen. Bei dieser Anordnung kann eine besonders gute Abbildung mittels der monozentrischen Optikeinheit realisiert werden.

Insbesondere kann die Relays-Optik als monozentrische Optikeinheit als ausgebildet sein.

Unter einer monozentrischen Optikeinheit wird hier insbesondere ein optisches System verstanden, bei dem sämtliche (brechende und/oder reflektierende) Wirkflächen konzentrisch um einen gemeinsamen Krümmungsmittelpunkt angeordnet sind.

Unter einer Relays-Optik wird hier insbesondere eine Optik verstanden, die ein achsensenkrechtes Flächenelement invertiert auf sich selbst abbildet. Es ist jedoch auch möglich, die Relays-Optik derart aufgefalten auszubilden, daß die Abbildung des Flächenelementes auf sich selbst nicht mehr vorliegt, aber ohne Auffaltung vorliegen würde. Die monozentrische Optikeinheit bildet ein ganzes Volumenelement um den gemeinsamen Krümmungsmittelpunkt herum (invertiert) in sich ab. Auch die monozentrische Optikeinheit kann natürlich derart ausgebildet sein, daß die Abbildung des Volumenelementes in sich selbst ohne Auffaltung vorliegen würde. Dadurch können die schräg zur optischen Achse der monozentrischen Optikeinheit bzw. der Relays-Optik angeordneten DMD-Ebenen, wenn man den Einfluß der Deckgläser nicht berücksichtigt, verzeichnungsfrei und mit guter Wellenfrontqualität aufeinander abgebildet werden. Die in der Praxis auftretenden Bildfehler aufgrund des schrägen Durchlaufen des Lichtes durch die Deckgläser werden erfindungsgemäß mit dem Korrekturelement korrigiert. Insbesondere für Bildinhalte, die eine räumlich nahe Änderung der Farben und/oder Helligkeiten aufweisen, treten feldabhängige Helligkeitsveränderungen bzw. Farbveränderungen auf. So ändern sich beispielsweise bei der Darstellung von einzelnen, weißen Pixeln auf schwarzem Hintergrund sowohl die Helligkeiten als auch die Farben der "weißen" Pixel über das Bild. Im Idealfall können durch Korrektur bzw. Verminderung der Bildfehler die beschriebenen feldabhängigen Helligkeitsveränderungen bzw. Farbveränderungen so stark verringert bzw. unterdrückt werden, daß sie nicht mehr wahrnehmbar sind.

Die Relays-Optik bzw. die monozentrische Optikeinheit ist insbesondere als 1:1-Abbildungsoptik ausgebildet.

Das Korrekturelement kann eine gekrümmte Fläche aufweisen, die als Freiformfläche ausgebildet ist, deren Krümmung in zwei senkrecht zueinander verlaufenden Schnitten unterschiedlich verläuft und sich abhängig von der Position auf der Fläche ändert.

Das Korrekturelement ist als refraktives Element ausgebildet. Das refraktive Element kann eine lokal variierende Dicke aufweisen, die so gewählt ist, daß die gewünschte Korrektur bewirkt wird. Dies kann insbesondere dadurch erreicht werden, daß mittels dem refraktiven Element ein zu dem durch die Deckgläser hervorgerufener Fehler entgegengesetzter Fehler bzw. quasi gleich groß entgegengesetzter Fehler verursacht wird, so daß dadurch die gewünschte Korrektur erzielt wird.

Ferner kann z.B. eine Fläche des refraktiven Elementes als Freiformfläche ausgebildet sein, deren Krümmung in zwei senkrecht zueinander verlaufenden Schnitten unterschiedlich verläuft und sich abhängig von der Position auf der Fläche ändert. Die andere Fläche kann z.B. sphärisch gekrümmt, plan, asphärisch oder in gleicher Weise wie die eine Fläche als Freiformfläche ausgebildet sein.

Die Relays-Optik bzw. die monozentrische Optikeinheit weist einen Spiegel mit einer gekrümmten Spiegelfläche auf, der durch eine verspiegelte Seite des refraktiven Elementes gebildet ist. Ferner kann die Projektionsvorrichtung zwei refraktive Elemente aufweisen, die die gewünschte Korrektur durchführen. In diesem Fall kann z.B. die Relays-Optik bzw. die monozentrische Optikeinheit zwei Spiegel mit jeweils einer gekrümmten Spiegelfläche aufweisen, die jeweils durch eine verspiegelte Seite eines der beiden refraktiven Elemente gebildet ist.

Das zumindest eine refraktive Korrekturelement kann so positioniert sein, dass genau zweimal von dem Licht durchlaufen wird, das mittels der Relays-Optik bzw. der monozentrischen Optikeinheit von den ersten Kippspiegeln auf die zweiten Kippspiegel abgebildet wird.

Die Relays-Optik bzw. die monozentrische Optikeinheit kann einen Primärspiegel mit einer konkaven sphärischen Spiegelfläche und einen Sekundärspiegel mit einer konvexen sphärischen Spiegelfläche aufweisen.

Des weiteren kann die Relays-Optik bzw. die monozentrische Optikeinheit als katadioptrische Optikeinheit ausgebildet sein.

Des weiteren kann die Abbildungsoptik und/oder die Relays-Optik bzw. die monozentrische Optikeinheit spiegelsymmetrisch zu genau einer Symmetrieebene ausgebildet sein.

Des weiteren ist es möglich, daß die Relays-Optik bzw. die monozentrische Optikeinheit zwei Spiegel aufweist, wobei einer der beiden Spiegel als konkaver Spiegel und der andere der beiden Spiegel als konvexer Spiegel ausgebildet ist und der Strahlengang von der ersten Kippspiegelmatrix über den konkaven Spiegel zum konvexen Spiegel und wiederum über den konkaven Spiegel bis zur zweiten Kippspiegelmatrix verläuft.

Insbesondere weist die erfindungsgemäße Projektionsvorrichtung genau zwei (z.B. sphärisch) gekrümmte Spiegel auf. Darüber hinaus kann die erfindungsgemäße Projektionsvorrichtung noch weitere plane Umlenkspiegel enthalten.

Ferner kann die erfindungsgemäße Projektionsvorrichtung eine Steuereinheit zum Betrieb der Projektionsvorrichtung, eine Lichtquelle (ein- oder mehrfarbig) zum Beleuchten der ersten Kippspiegelmatrix sowie sonstige dem Fachmann bekannte Elemente aufweisen, die zum Betrieb der Projektionsvorrichtung notwendig sind.

Es wird ferner eine Projektionsvorrichtung mit einer ersten und einer zweiten Kippspiegelmatrix, einer Abbildungsoptik, die die erste Kippspiegelmatrix auf die zweite Kippspiegelmatrix abbildet, und einer Projektionsoptik, die die zweite Kippspiegelmatrix abbildet (insbesondere auf eine Projektionsfläche), um ein Bild zu erzeugen, bereitgestellt, wobei die Abbildungsoptik zwei gekrümmte Spiegel und ein refraktives Element mit zumindest einer gekrümmten Fläche aufweist, wobei von den beiden gekrümmten Spiegelflächen und der gekrümmten refraktiven Fläche zumindest eine Fläche als Freiformfläche ausgebildet ist, deren Krümmung in zwei senkrecht zueinander verlaufenden Schnitten unterschiedlich verläuft und sich abhängig von der Position auf der Fläche ändert.

Ferner wird eine Projektionsvorrichtung mit einer ersten und einer zweiten Kippspiegelmatrix, einer Abbildungsoptik, die die erste Kippspiegelmatrix auf die zweite Kippspiegelmatrix abbildet, und eine Projektionsoptik, die die zweite Kippspiegelmatrix abbildet (insbesondere auf eine Projektionsfläche), um ein Bild zu erzeugen, bereitgestellt, wobei die Abbildungsoptik zwei gekrümmte Spiegel mit jeweils gekrümmter Spiegelfläche aufweist, wobei zumindest eine der beiden Spiegelflächen als Freiformfläche ausgebildet ist, deren Krümmung in zwei senkrecht zueinander verlaufenden Schnitten unterschiedlich verläuft und sich abhängig von der Position der Spiegelfläche ändert.

Die Abbildungsoptik der beiden weiteren Projektionsvorrichtungen kann insbesondere so ausgebildet sein, wie bereits beschrieben wurde.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbart, noch näher erläutert. Es zeigen:

Fig. 1 eine schematische Ansicht einer Ausführungsform der erfindungsgemäßen Projektionsvorrichtung;

Fig. 2 eine schematische Darstellung zur Erläuterung der Lichtmodulation mit den beiden Kippspiegelmatrizen 3, 5 der Projektionsvorrichtung 1 von Fig. 1;

Fig. 3 eine perspektivische Ansicht der Abbildungsoptik 4 der Projektionsvorrichtung 1 von Fig. 1;

Fig. 4 eine Seitenansicht der Abbildungsoptik 4 gemäß Fig. 3;

Fig. 5 eine Draufsicht der Abbildungsoptik 4 gemäß Fig. 3;

Fig. 6 und 7 Darstellungen von Bildfehlern der Projektionsvorrichtung von Fig. 3-5;

Fig. 8 und 9 Darstellungen von Bildfehlern einer Projektionsvorrichtung ohne refraktives Korrekturelement 18;

Fig. 10 eine perspektivische Ansicht einer weitern Ausführungsform der Abbildungsoptik 4 der Projektionsvorrichtung von Fig. 1;

Fig. 11 eine Seitenansicht der Abbildungsoptik 4 gemäß Fig. 10;

Fig. 12 eine Draufsicht der Abbildungsoptik 4 gemäß Fig. 10;

Fig. 13 und 14 Darstellungen von Bildfehlern in gleicher Weise wie in Fig. 6 und 7 für die Projektionsvorrichtung gemäß Fig. 10 bis 12;

Fig. 15 eine perspektivische Ansicht einer weiteren Ausführungsform der Abbildungsoptik 4 der Projektionsvorrichtung 1 gemäß Fig. 1;

Fig. 16 eine Seitenansicht der Abbildungsoptik 4 von Fig. 15;

Fig. 17 eine Draufsicht der Abbildungsoptik 4 von Fig.15;

Fig. 18 und 19 Darstellungen von Bildfehlern in gleicher Weise wie in Fig. 6 und 7 für die Projektionsvorrichtung gemäß Fig. 15-17;

Fig. 20 eine perspektivische Ansicht einer weiteren Abbildungsoptik 4 , die keine Ausfuhrungsformder der Projektionsvorrichtung 1 gemäß Fig. 1; vorliegenden Erfindung darstellt;

Fig. 21 eine Seitenansicht der Abbildungsoptik 4 von Fig. 20;

Fig. 22 eine Draufsicht der Abbildungsoptik 4 von Fig. 20;

Fig. 23 und 24 Darstellungen von Bildfehlern in gleicher Weise wie in Fig. 6 und 7 für die Projektionsvorrichtung gemäß Fig. 20-22;

Fig. 25 eine perspektivische Ansicht einer weiteren Abbildungspptik 4, der Projektionsvorrichtung 1 von Fig. 1 ; die keine Ausfuhrungsform der vorliegenden Erfindung darstellt

Fig. 26 eine Seitenansicht der Abbildungsoptik 4 von Fig. 25;

Fig. 27 eine Draufsicht der Abbildungsoptik 4 von Fig. 25;

Fig. 28 und 29 Darstellungen von Bildfehlern in gleicher Weise wie in Fig. 6 und 7 für die Projektionsvorrichtung gemäß Fig. 25-27;

Fig. 30 eine perspektivische Ansicht einer weiteren Abbildungsoptik 4 der Projektionsvorrichtung 1 von Fig. 1; die keine Ausführungsform der vorliegenden Erfindung darstellt

Fig. 31 eine Draufsicht der Abbildungsoptik 4 von Fig. 30;

Fig. 32 eine Seitenansicht der Abbildungsoptik 4 von Fig. 30, und

Fig. 33 eine Darstellung von Bildfehlern für die Projektionsvorrichtung gemäß Fig. 30-32.

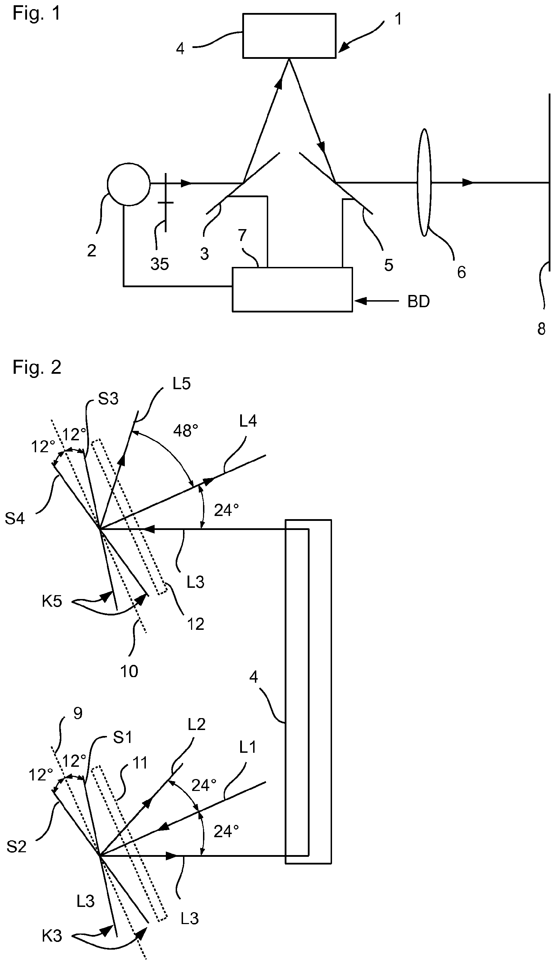

Bei der in Fig. 1 schematisch gezeigten Ausführungsform umfaßt die erfindungsgemäße Projektionsvorrichtung 1 zum Projizieren eines Bildes eine Lichtquelle 2, einen Beleuchtungsmodulator 3, eine Abbildungsoptik 4, ein Bildmodulator 5, eine Projektionsoptik 6 sowie eine Steuereinheit 7.

Die beiden Modulatoren 3, 5 sind jeweils als Kippspiegelmatrix ausgebildet, die n x m Kippspiegel (bzw. Mikrospiegel) in Spalten und Zeilen aufweisen, wobei die Kippspiegel voneinander unabhängig in eine erste und in eine zweite Kippstellung gebracht werden können. Beide Kippspiegelmatrizen 3, 5 können gleich ausgebildet sein und/oder die gleiche Anzahl und Anordnung von Kippspiegeln aufweisen.

Die Abbildungsoptik 4 ist als 1:1-Abbildungsoptik ausgebildet und bildet jeden Kippspiegel des Beleuchtungsmodulators 3 genau auf einen Kippspiegel des Bildmodulators 5 ab, so daß zu jedem Kippspiegel des Beleuchtungsmodulators 3 genau ein Kippspiegel des Bildmodulators 5 zugeordnet ist. Es sind auch andere Zuordnungen der Kippspiegel möglich. So kann zum Beispiel ein Versatz in Zeilenrichtung so vorgesehen sein, daß jeder Kippspiegel des Bildmodulators 5 durch zwei Kippspiegel (jeweils zur Hälfte) des Beleuchtungsmodulators 3 beleuchtet wird.

Die beiden Modulatoren 3 und 5 werden von der Steuereinheit 7 basierend auf zugeführten Bilddaten BD so angesteuert, daß der Beleuchtungsmodulator 3, der mit dem Licht (z. B. weißem Licht) der Lichtquelle 2 beaufschlagt wird, eine flächig modulierte Lichtquelle für den Bildmodulator 5 ist, mit dem das zu projizierende Bild erzeugt bzw. moduliert wird, das dann mittels der Projektionsoptik 6 auf eine Projektionsfläche 8 projiziert werden kann.

Der Beleuchtungsmodulator 3 kann so angesteuert werden, daß nur das Licht, das von den Kippspiegeln des Beleuchtungsmodulators reflektiert wird, die nicht schwarzen Bildpixeln (bzw. die den entsprechenden Kippspiegeln) des Bildmodulators 5 zugeordnet sind, auf den Bildmodulator 5 abgebildet wird. Dadurch kann erreicht werden, daß Bildpixel bzw. Kippspiegel des Bildmodulators 5, die schwarze Bildpunkte darstellen sollen, nicht mit Licht beaufschlagt werden (da die zugeordneten Kippspiegel des Beleuchtungsmodulators 3 bzw. das von diesem Kippspiegel reflektierte Licht nicht auf den Bildmodulator 5 abgebildet wird). Dies führt in vorteilhafter Weise dazu, daß der Schwarzpegel (die unerwünschte Resthelligkeit eines schwarzen Bildpunktes im tatsächlichen projizierten Bild) deutlich reduziert werden kann.

Die Lichtmodulation durch die beiden Kippspiegelmatrizen 3 und 5 wird in Verbindung mit der schematischen Darstellung in Fig. 2 näher erläutert.

In Fig. 2 ist stellvertretend für jede Kippspiegelmatrix 3, 5 jeweils nur ein einziger Kippspiegel K3, K5 in seinen beiden möglichen Kippstellungen eingezeichnet, wobei eine Verkippung der Kippspiegelmatrizen 3, 5 um 24° (um die x-Achse, die senkrecht zur Zeichenebene verläuft) relativ zur Abbildungsoptik 4, wie bei den konkreten Ausführungsbeispielen noch detaillierter erläutert wird, schon schematisch dargestellt ist.

Der Kippwinkel der Kippspiegel K3, K5 beträgt $\pm$ 12° relativ zur jeweiligen DMD-Ebene 9,10 (Ebene der Mittelpunkte der Kippspiegel K3 bzw. K5), die um die 24° verkippt ist. Ferner ist in der schematischen Darstellung von Fig. 2 noch jeweils gestrichelt ein Deckglas 11, 12 eingezeichnet. Diese Deckgläser 11,12 sind bei Kippspiegelmatrizen zwingend notwendig, um das Vakuum, in dem sich die Kippspiegel K3, K5 befinden, aufrecht zu erhalten. Die Deckgläser 11 und 12 müssen somit dem Druckunterschied zwischen Normaldruck und Vakuum standhalten und weisen daher in der Regel eine Dicke von mehreren Millimetern auf. Bei den hier beschriebenen Ausführungsformen wird von einer Dicke von 3 mm ausgegangen, wobei als Glasart BK7 verwendet wird.

Die Kippspiegel K3 und K5 sind in Fig. 2 in einer Schnittdarstellung gezeigt, die so gewählt ist, daß die jeweilige Kippachse der beiden Kippspiegel K3 und K5 senkrecht zur Zeichenebene verläuft. Ferner liegen die beiden DMD-Ebenen 9, 10 in einer gemeinsamen Ebene, was zur besseren Darstellbarkeit in Fig. 2 nicht dargestellt ist.

Der Kippspiegel K3 des Beleuchtungsmodulators 3 kann entweder in seiner ersten Kippstellung S1 oder in seiner zweiten Kippstellung S2 stehen. Beide Kippstellungen sind 12° gegenüber der DMD-Ebene 9 geneigt. In Fig. 2 sind beide Kippstellungen S1 und S2 eingezeichnet. Natürlich kann der Kippspiegel K3 zu einem Zeitpunkt immer nur in einer der beiden Kippstellungen S1 und S2 stehen. Gleiches gilt für den Kippspiegel K5 des Bildmodulators 5. Der Kippspiegel K5 kann entweder in seiner ersten Stellung S3 oder in seiner zweiten Stellung S4 stehen.

Im Betrieb des Projektors 1 wird der Kippspiegel K3 mit Licht L1 der Lichtquelle 2 so beaufschlagt, daß das Licht senkrecht zur DMD-Ebene 9 auf den Kippspiegel K3 trifft. Wenn der Kippspiegel K3 in seiner zweiten Stellung S2 steht, wird das Licht, da der Kippspiegel K3 relativ zur Ebene 9 gegen den Uhrzeigersinn um 12°gekippt ist, unter einem Winkel von 24°zur Einfallsrichtung des Lichtes L1 als sogenanntes Aus-Licht L2 auf eine nicht gezeigte Strahlfalle reflektiert. Das Aus-Licht L2 wird nicht zur Beleuchtung des Bildmodulators 5 verwendet.

Wenn jedoch der Kippspiegel K3 in seiner ersten Stellung S1 steht, wird das Licht als sogenanntes Ein-Licht L3 unter einem Winkel von 24° relativ zur Einfallsrichtung des Lichtes L1 reflektiert. Dieses Ein-Licht L3 wird, wie nachfolgend noch detaillierter beschrieben wird, mittels der Abbildungsoptik 4 auf den zugeordneten Kippspiegel K5 des Bildmodulators 5 abgebildet. Die Einfallsrichtung des Ein-Lichtes L3 auf den Kippspiegel K5 ist dabei so gewählt, daß das reflektierte Licht L4, wenn der Kippspiegel K5 in seiner ersten Stellung S3 steht, senkrecht zur DMD-Ebene 10 verläuft. Dazu weist das auf den Kippspiegel K5 einfallende Licht L3 einen Winkel von 24° zum Lot auf die DMD-Ebene 10 auf. Dies führt bei der ersten Kippstellung S3 des Kippspiegels K5 zu der gewünschten Reflexion, so daß das Licht L4 mittels der Projektionsoptik 6 auf die Projektionsfläche 8 projiziert werden kann.

Wenn der zweite Kippspiegel K5 in seiner zweiten Stellung S4 steht, wird das Licht unter einem Winkel von 48° relativ zum Lot auf die DMD-Ebene 10 als Aus-Licht L5 reflektiert. Dieses Aus-Licht L5 wird in eine Strahlfalle (nicht gezeigt) geleitet und wird nicht bei der Bildprojektion auf die Projektionsfläche 8 verwendet.

In dieser Art und Weise kann mittels der Kippspiegelmatrix 3 die flächig modulierte Lichtquelle bereitgestellt werden, bei der alle Kippspiegel K3 des Beleuchtungsmodulators 3, die auf einen Kippspiegel K5, der einen nicht schwarzen Bildpunkt darstellen soll, des Bildmodulators 5 abgebildet werden, in die erste Kippstellung gebracht werden. Mittels des Bildmodulators 5 können dann die beleuchteten Kippspiegel K5 so in die erste und zweite Kippstellung geschaltet werden, das während einer Dauer T einer Einzelbilddarstellung die gewünschte Helligkeit des entsprechenden Bildpunktes erzeugt wird. Die Helligkeit kann durch das Verhältnis der Zeitdauer, während der der Kippspiegel K5 in seiner ersten Stellung steht und während der der Kippspiegel K5 in seiner zweiten Stellung steht, eingestellt werden. Die Ansteuerung der beiden Modulatoren 3, 5 kann mit pulsweitenmodulierten Steuerdaten erfolgen, die die Steuereinheit 7 basierend auf den zugeführten Steuerdaten BD erzeugt.

Für eine kontrastreiche Bildprojektion ist es wichtig, daß die Abbildungsoptik 4 effizient ist und minimale Bildfehler wie Verzeichnung oder chromatische Aberrationen aufweist. Da die Deckgläser 11, 12 von dem Ein-Licht L3 jeweils schräg durchlaufen werden, tritt eine laterale Ablage bei der Abbildung des Kippspiegels K3 auf den Kippspiegel K5 auf. Selbst eine relativ geringe laterale Ablage, die typischerweise bis zu 30 $\mu$m beträgt und für verschiedene Feldpunkte variiert, führt bei einer typischen Ausdehnung der Kippspiegel K3 und K5 von kleiner als 15 $\mu$m zu schlechteren Projektionseigenschaften.

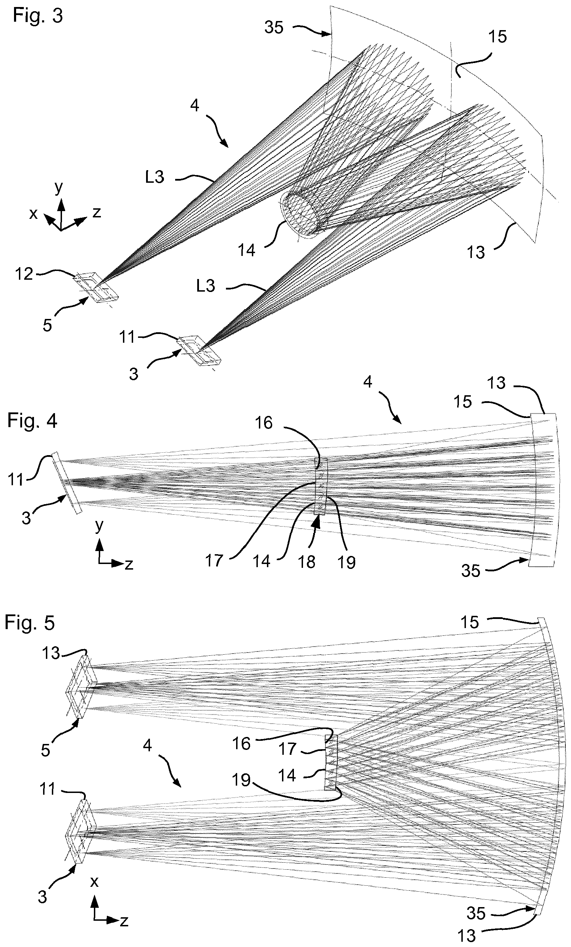

Um diese schlechteren Projektionseigenschaften beziehungsweise die diese bedingende laterale Ablage der Bildpunkte der zweiten Kippspiegelmatrix 5 zu verringern, weist bei der Ausführungsform gemäß Figuren 3 bis 5 die Abbildungsoptik 4 eine monozentrische Optikeinheit 35 mit einem Primärspiegel 13 und einem Sekundärspiegel 14 sowie ein refraktives Korrekturelement 18 auf. Die monozentrische Optikeinheit 35, bei der sämtliche (brechende und/oder reflektierende) Wirkflächen konzentrisch um einen gemeinsamen Krümmungsmittelpunkt angeordnet sind, ist hier als sogenanntes Offner-System ausgebildet und weist, wie alle monozentrischen optischen Systeme, generell die Eigenschaft auf, einen kleinen Volumenbereich um den gemeinsamen Krümmungsmittelpunkt mittels einer nahezu fehlerfreien Zwischenabbildung in sich (invertiert) abzubilden. Dadurch ist es möglich, derartige monozentrische Systeme auch als Relays-Optik für schräg zum Strahlengang und zueinander parallel angeordnete Objekt- und Bildfelder einzusetzen.

Da bei handelsüblichen Kippspiegelmatrizen die Kippachse, um die die einzelnen Kippspiegel kippen, gegenüber den Außenkanten der rechteckigen Gesamtmatrix verdreht sind (und zwar typischerweise um 45°) sind die Kippspiegelmatrizen 3 und 5 entsprechend verdreht angeordnet, wie insbesondere Figuren 3 und 5 zu entnehmen ist, damit die Kippachsen in der x-Richtung verlaufen. Ferner liegt die bereits beschriebene Verkippung der DMD-Ebenen um 24° um die x-Achse vor.

Die Spiegelfläche 15 des Primärspiegels 13 ist eine konkave sphärische Fläche und die Spiegelfläche 16 des Sekundärspiegels 14 ist eine konvexe sphärische Fläche, wobei die beiden Krümmungsmittelpunkte der beiden Spiegelflächen 15 und 16 zusammenfallen. Das zur Korrektur der durch die Deckgläser 11 und 12 bedingten Aberrationen vorgesehene Korrekturelement 18 ist hier als Linse 18 ausgebildet, wobei der Sekundärspiegel 14 auf der Rückseite 17 der Linse 18 angeordnet ist. Die dem Primärspiegel 13 zugewandte Vorderseite 19 der Linse 18 ist als Freiformfläche ausgebildet, deren Krümmung in zwei senkrecht zueinander verlaufenden Schnitten unterschiedlich verläuft und sich abhängig von der Position an der Vorderseite 19 ändert.

Die Krümmung der Vorderseite 19 kann beispielsweise durch eine Polynomentwicklung gemäß der folgenden Formel 1 beschrieben werden:

$$z = \frac{(x^2 + y^2)/R}{1 + \sqrt{1 - (1+k) \cdot \frac{(x^2 + y^2)}{R^2}}} + \sum_{i,j} C_{ij} x^i y^j$$

$$(1)$$

Die Freiformfläche der Vorderseite 19 ist hier spiegelsymmetrisch bezüglich der yz-Ebene ausgebildet, so daß

die Entwicklungskoeffizienten $C_{ij}$ der obigen Formel 1 einen von Null verschiedenen Wert aufweist, wenn der Koeffizient $C_{ij}$ eine gerade Potenz von x beschreibt.

Die Entwicklungskoeffizienten $C_{ij}$ für die Vorderseite 19 der Linse 18 sind in nachfolgender Tabelle angegeben, wobei als Bezeichnung XiYj gewählt ist. Falls i = 0 ist Xi nicht angegeben. Gleiches gilt für j = 0. In diesem Fall ist Yj nicht angegeben. Ferner ist für j = 1 nur Y angegeben. So bezeichnet zum Beispiel X2Y den Entwicklungskoeffizienten $C_{21}$, Y4 den Entwicklungskoeffizienten $C_{04}$ und X4Y den Entwicklungskoeffizienten $C_{41}$.

| Y: -3,9260E-03 | X2: 8,4604E-03 | Y2: 8,4484E-03 |
|---|---|---|
| X2Y: -2,9354E-07 | Y3: -3,0556E-07 | X4: 1,7613E-06 |
| X2Y2: 3,5208E-06 | Y4: 1,7616E-06 | X4Y: -4,0056E-11 |
| X2Y3: -5,8332E-11 | Y5: -3,9814E-11 | X6: 6,0814E-10 |
| X4Y2: 1,8397E-09 | X2Y4: 1,8379E-09 | Y6: 6,0026E-10 |

Die Spiegellinse 18 weist hier eine Dicke von 6 mm und als Material wird BK7 verwendet. Ferner wird eine numerische Apertur von 0,1 für die Beleuchtung der Kippspiegel K3 und K5 für die vorliegende Ausführungsform und für alle nachfolgenden Ausführungsformen angenommen.

Aufgrund der unterschiedlichen Krümmungsverläufe der brechenden Vorderseite 19 (bzw. brechende Freiformfläche) in den zwei orthogonalen Hauptschnitten gelingt es gleichzeitig, die Farbquerfehler, den Achsastigmatismus und die Achskoma hervorragend zu korrigieren.

Da der Sekundärspiegel 15 als Spiegellinse 18 ausgebildet ist, ist die zu bearbeitende Vorderseite 19 klein, so daß Herstellungskosten und Gewicht minimiert werden können. Ferner liegt die gewünschte Justierung zwischen der brechenden Fläche (Vorderseite 19) und der Spiegelfläche 16 des Sekundärspiegels 14 vor.

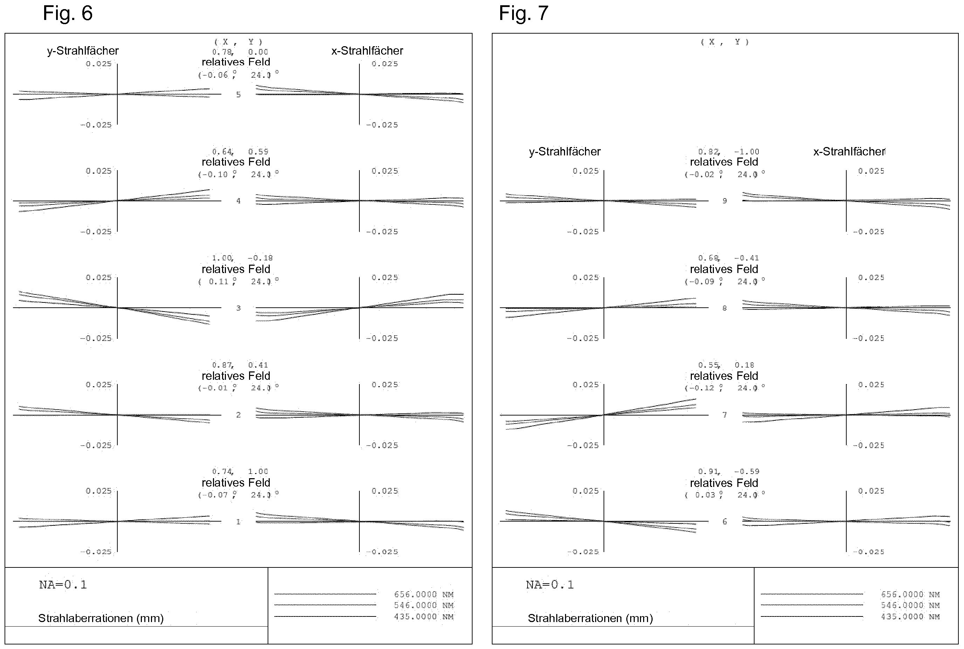

In Fig. 6 und 7 sind Bildfehlerdarstellungen der Projektionsvorrichtung 1 gemäß Fig. 3 bis 5 gezeigt, wobei jeweils zwei Spalten dargestellt sind. Die linke Spalte bezieht sich auf den Hauptschnitt in der yz-Ebene und die rechte Spalte auf den Hauptschnitt senkrecht dazu in der xz-Ebene, wobei die Bildfehler in mm jeweils für die Wellenlängen 435, 546 und 656 nm dargestellt sind. Zwischen den entsprechenden Bildfehlerkurven für die beiden Hauptschnitte sind jeweils die relative x- und y-Koordinate nebeneinander angegeben. Darunter sind die Hauptstrahlwinkel im Bildraum aufgeführt. So sind beispielsweise bei der obersten Darstellung in Fig. 6 die x- und y-Koordinate 0,78 und 0,00. Der Hauptstrahlwinkel beträgt -0,06° bzw. 24,0°.

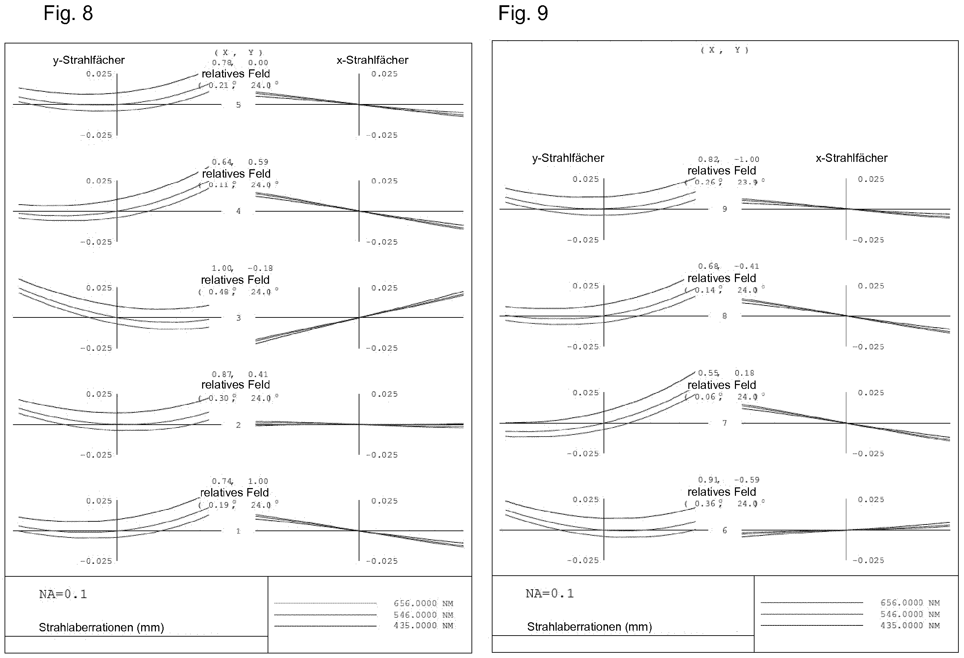

In Fig. 8 und 9 sind zum Vergleich in gleicher Weise wie in Fig. 6 und 7 Bildfehler einer Abbildungsoptik gezeigt, die zwar als Offner-System gemäß Fig. 3 bis 5 ausgebildet ist, jedoch kein Korrekturelement enthält.

Wie der Vergleich der in Fig. 8 und 9 dargestellten Bildfehler mit denen gemäß der erfindungsgemäßen Ausbildung der Projektionsvorrichtung in Fig. 6 und 7 zeigt, liegt eine ausgezeichnete Korrektur des Farbquerfehlers, des Astigmatismus und des Achskoma in den beiden Hauptschnitten vor. Während bei der herkömmlichen Lösung gemäß Fig. 8 und 9 eine laterale Ablage der Bildpunkte auf der zweiten Kippspiegelmatrix 5 von bis zu 30 μm vorliegt, was bei einer typischen Kippspiegelgröße von kleiner 15 μm eine pixelgenaue Zuordnung der Kippspiegel K3 und K5 der beiden Kippspiegelmatrixen 3, 5 verhindert. Bei der erfindungsgemäßen Projektionsvorrichtung 1 ist die laterale Ablage der Bildpunkte auf der zweiten Kippspiegelmatrix von der idealen Ist-Position deutlich geringer, so daß bessere Abbildungseigenschaften bereitgestellt sind.

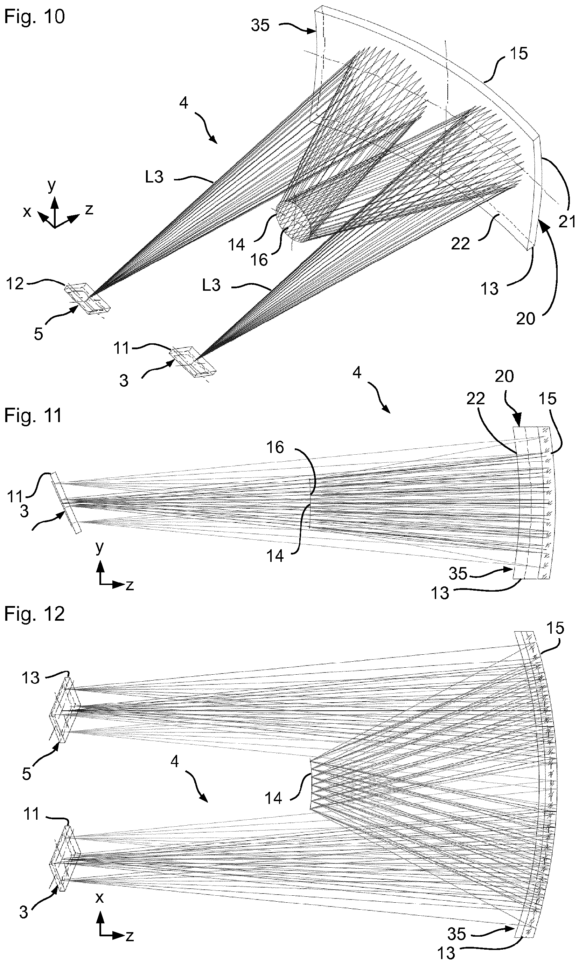

In Figuren 10 bis 12 ist in gleicher Weise wie in Figuren 3 bis 5 die Abbildungsoptik 4 einer zweiten Ausführungsform der erfindungsgemäßen Projektionsvorrichtung 1 gezeigt, wobei wiederum von einem Offner-System als monozentrische Optikeinheit 35 ausgegangen wird. Bei der Abbildungsoptik 4 gemäß Figuren 10 bis 12 ist nun im Unterschied zu der Ausführungsform gemäß Figuren 3 bis 5 nicht der Sekundärspiegel 14 als Spiegellinse und Korrekturelement ausgebildet, sondern der Primärspiegel 13 und kann somit als Spiegellinse 20 bezeichnet werden. Die Rückseite 21 der Spiegellinse 20 ist sphärisch gekrümmt und verspiegelt und bildet die Spiegelfläche 15. Die dem Sekundärspiegel 14 zugewandte Vorderseite 22 der Spiegellinse 20 ist wiederum als erfindungsgemäße Freiformfläche ausgebildet, deren Krümmung in zwei senkrecht zueinander verlaufenden Schnitten unterschiedlich verläuft und sich abhängig von der Position auf der Fläche ändert. Die Spiegellinse kann eine Dicke von 6 mm aufweisen und als Material kann beispielsweise NFK5 verwendet werden. Die Freiformfläche bzw. Vorderseite 22 kann durch eine Polynomentwicklung gemäß Formel 1 beschrieben werden, wobei die Entwicklungskoeffizienten $C_{ij}$ in nachfolgender Tabelle 2 in gleicher Art und Weise wie in Tabelle 1 angegeben sind.

| Y: 1,2255E-03 | X2: -9,9112E-05 | Y2: -9,6702E-05 |
|---|---|---|
| X2Y: 2,7816E-08 | Y3: 2,6980E-08 | X4: -1,1159E-09 |

(fortgesetzt)

| X2Y2: -2,3669E-09 | Y4: -1,1140E-09 | |
|---|---|---|

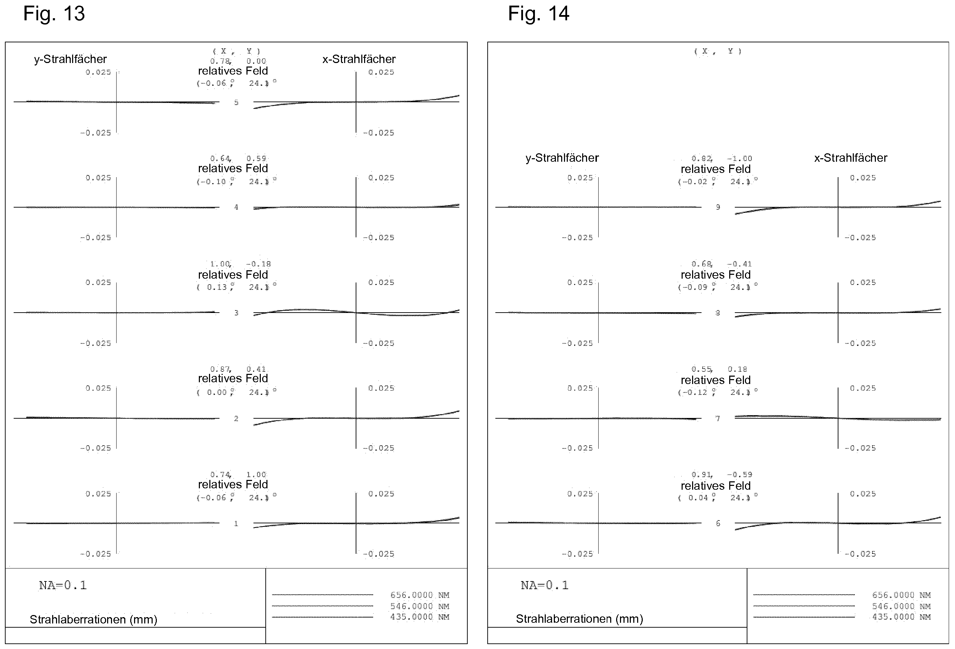

Bei dieser Ausbildung können alle chromatischen und monochromatischen Bildfehler gleichzeitig hervorragend korrigiert werden, wie den Bildfehlerdarstellungen in Fig. 13 und 14 zu entnehmen ist. Dies ist sogar mit einer niedrigen Polynomordnung der Freiformfläche 22 möglich im Vergleich zu der Ausführungsform gemäß Figuren 3 bis 5. Die Freiformfläche 22 liegt im Zwischenbereich zwischen feldnah und aperturnah und ist daher besonders geeignet, um eine hervorragende Korrektur aller auftretender Bildfehler zu gewährleisten. Die Abbildung der Abbildungsoptik 4 ist praktisch beugungsbegrenzt und weist nur äußerst geringe Verzeichnungen der Bildpunkte in beiden Koordinatenrichtungen auf.

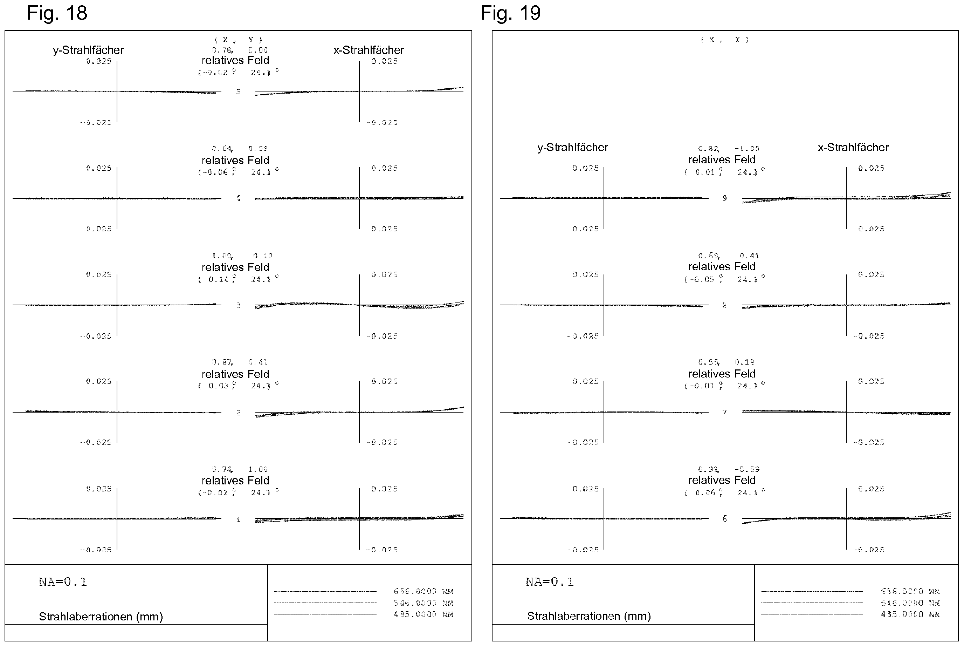

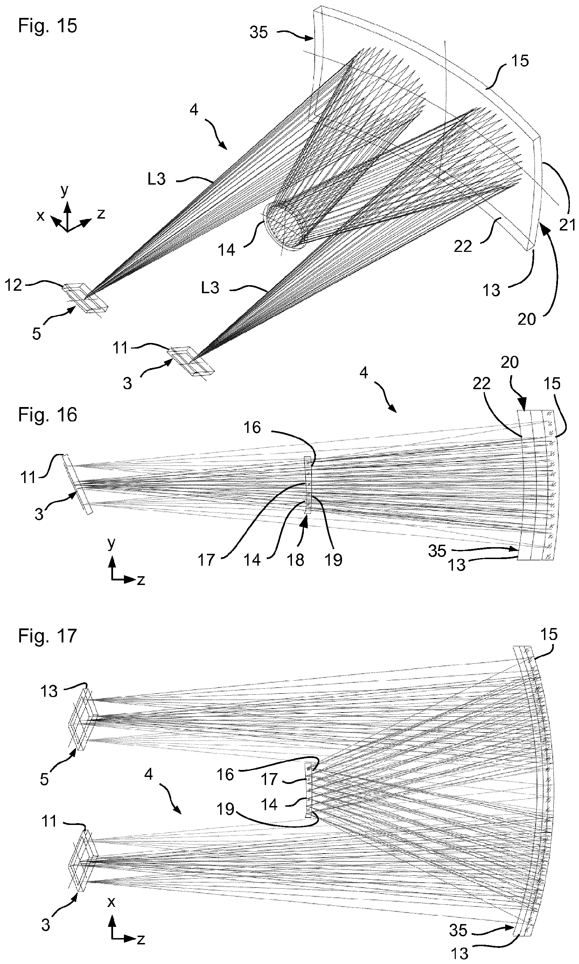

In Figuren 15 bis 17 ist die Abbildungsoptik 4 einer weiteren Ausführungsform der erfindungsgemäßen Projektionsvorrichtung 1 gezeigt. Bei dieser Ausführungsform sind sowohl der Primärspiegel 13 als auch der Sekundärspiegel 14 jeweils als Spiegellinse 18, 20 ausgebildet, wobei die einander zugewandten Vorderseiten der Linsen 18, 20 jeweils als Freiformfläche geformt sind und die Rückseiten 17 und 21 der beiden Linsen 18 und 20 jeweils zur Bildung von sphärischem Primärspiegel 13 und sphärischem Sekundärspiegel 14 verspiegelt sind. Es sind somit zwei refraktive Korrekturelemente vorgesehen. Die beiden Spiegel 13 und 14 bilden die monozentrische Optikeinheit. Als Material der Spiegellinsen 18, 20 kann zum Beispiel NFK5 verwendet werden, wobei die Spiegellinse 18 eine Dicke von 3 mm und die Spiegellinse 20 eine Dicke von 6 mm aufweist. Mit dieser Ausbildung kann eine Verbesserung der Korrektur der Abbildungsoptik 4 im Vergleich zu der Variante gemäß Figur 10 bis 12 erzielt werden, wie z.B. den Bildfehlerdarstellungen in Fig. 18 und 19 zu entnehmen ist.

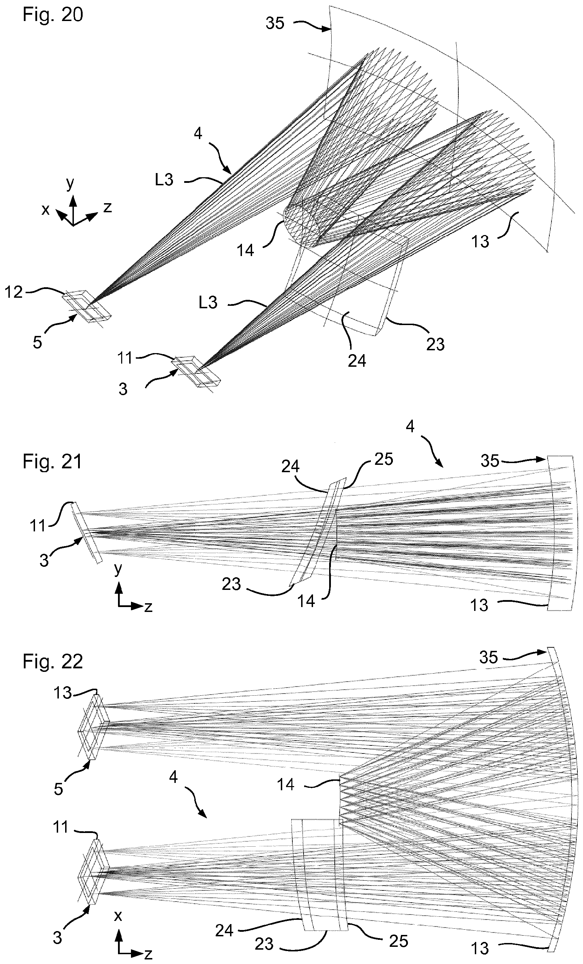

In Figuren 20 bis 22 ist eine weitere Ausbildung der Abbildungsoptik 4, die keine Ausführungsform der erfindungsgemäßen Projektionsvorrichtung 1 darstellt, gezeigt. Bei dieser Ausbildung bilden die beiden Spiegel 13 und 14 ein Offner-System (sie sind jeweils sphärisch gekrümmt und ihre Krümmungsmittelpunkte fallen zusammen). In dem Strahlengang vom Beleuchtungsmodulator 3 bis zum Primärspiegel 13 ist ein refraktives Korrekturelement 23 angeordnet, das eine dem Beleuchtungsmodulator 3 zugewandte Vorderseite 24 und eine dem Beleuchtungsmodulator 3 abgewandte Rückseite 25 aufweist. Die Dicke des Korrekturelementes 23 beträgt 5 mm und als Material wurde NFK5 verwendet. Sowohl die Vorderseite 24 als auch die Rückseite 25 sind als Freiformfläche ausgebildet, deren Krümmung in zwei senkrecht zueinander verlaufenden Schnitten unterschiedlich verläuft und sich abhängig von der Position auf der Fläche verändert.

Die Freiformfläche der Vorderseite 24 kann wiederum durch eine Polynomentwicklung gemäß Formel 1 beschrieben werden. Die entsprechenden Koeffizienten sind in der nachfolgenden Tabelle 3 angegeben.

| Y: -4,6015E-01 | X2: -1,9111 E-04 | Y2: -1,2464E-02 |
|---|---|---|
| X2Y: 1,7592E-06 | Y3: 1,6356E-04 | X4: 1,0384E-07 |
| X2Y2: 1,8553E-07 | Y4: -1,1638E-06 | |

In gleicher Weise kann die Rückseite 25 durch eine Polynomentwicklung gemäß Formel 1 beschrieben werden. Die Koeffizienten sind in der nachfolgenden Tabelle 4 angegeben.

| Y: -4,3142E-01 | X2: -1,7340E-04 | Y2: -1,2929E-02 |
|---|---|---|
| X2Y: 1,0752E-06 | Y3: 1,6435E-04 | X4: 9,8878E-08 |
| X2Y2: 1,7808E-07 | Y4: -1,1118E-06 | |

Der lokale Koordinatenursprung zur Flächenbeschreibung der Vorderseite 24 und Rückseite 25 geht aus dem globalen Koordinatenursprung (Schnittpunkt der optischen Achse des Offner-Systems mit der Verbindungsgeraden zwischen den beiden Modulatoren 3, 5) lediglich durch Verschiebung entlang der z-Achse um 151 mm (Vorderseite 24) bzw. 156 mm (Rückseite 25) hervor. Somit liegt der Entwicklungspunkt für die Polynomentwicklung der beiden Freiformflächen von Vorderseite und Rückseite 24, 25 außerhalb des optisch genutzten Bereiches der Flächen 24, 25 und auf der optischen Achse der für sich genommenen rotationssymmetrischen Relays-Optik 35 (die durch die beiden Spiegel 13 und 14 gebildete monozentrische Optikeinheit 35).

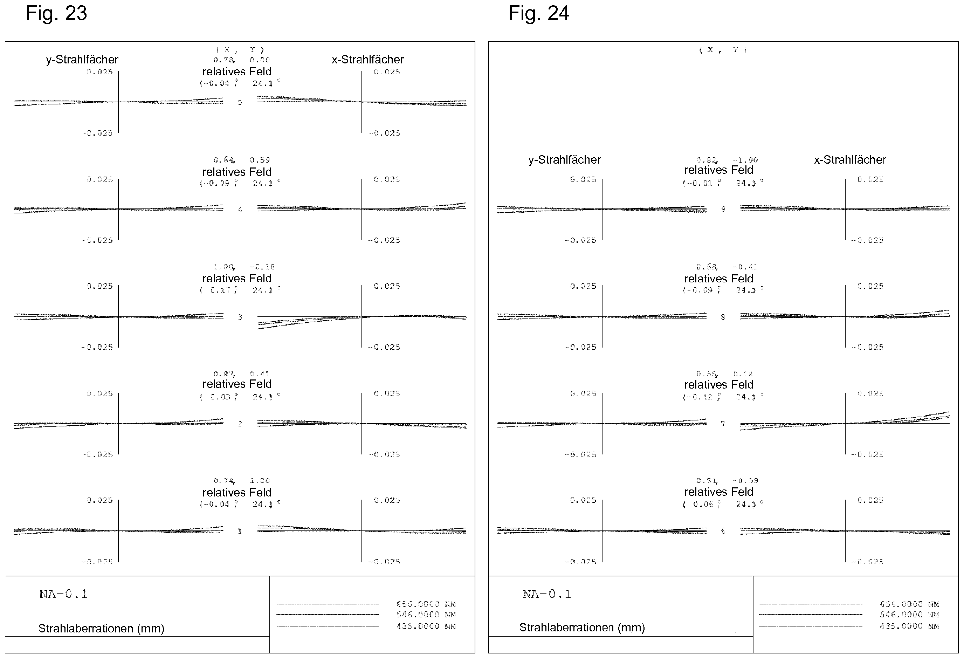

Mit einem solchen Korrekturelement 23 können die von den Deckgläsern 11, 12 verursachten Wellenfrontfehler nahezu vollständig kompensiert werden, wie den Bildfehlerdarstellungen in Fig. 23 und 24 zu entnehmen ist. Die Abbildung ist pixelgenau bzw. kippspiegelgenau. Die Verzeichnung, also die laterale Ablage der Bildpunkte auf dem Bildmodulator 5 von ihrer Idealbildposition ist hierbei für alle Feldpunkte in x- und y-Richtung kleiner als 5 $\mu$m.

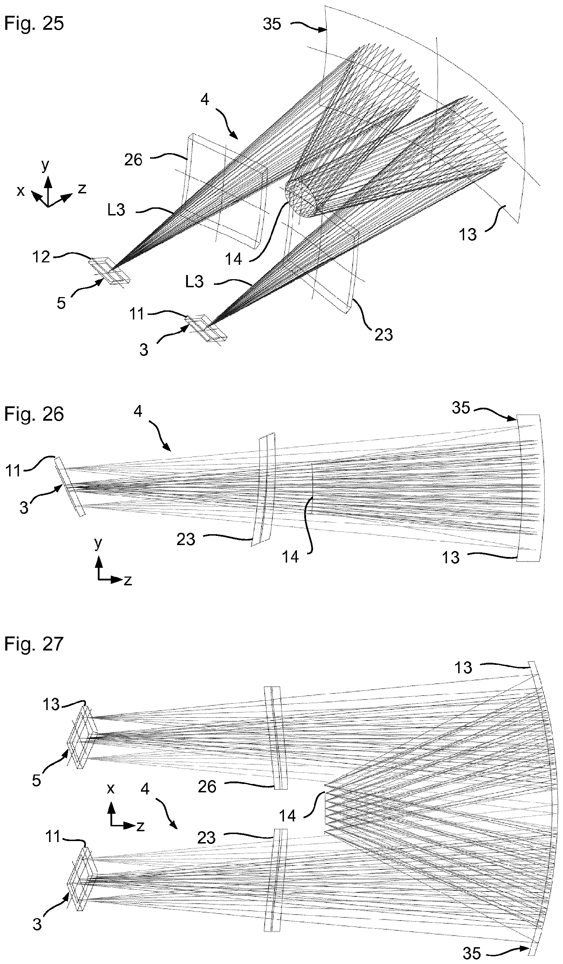

Eine weitere nicht erfindungsgemäße Abwandlung der Abbildungsoptik 4 ist in Figuren 25 bis 27 dargestellt. Bei dieser Abwandlung ist neben dem Korrekturelement 23 ein weiteres Korrekturelement 26 im Strahlengang zwischen dem Primärspiegel 13 und dem Bildmodulator 5 angeordnet. Das weitere Korrekturelement 26 kann, wie in den Darstellungen gemäß Figuren 25 bis 27 gezeigt, als separates Element ausgebildet sein. Es ist jedoch auch möglich, daß die beiden Korrekturelemente 23 und 26 als ein zusammenhängendes Korrekturelement ausgebildet sind. Die beiden Korrekturelemente 23 und 26 bzw. das als einziges Korrekturelement ausgebildete Korrekturelement 23 ist bevorzugt symmetrisch zur yz-Ebene. Diese symmetrische Ausführung hat den Vorteil, daß die Anforderung an die Positioniergenauigkeit des Korrekturelementes 23 bzw. der Korrekturelemente 23 und 26 etwas herabgesetzt sind und somit die Justage vereinfacht ist. Natürlich ist die Ausbildung als einziges Korrekturelement von Vorteil, da die Justierung der beiden Korrekturelemente 23, 26 zueinander entfällt und die Positionierung des einzigen Korrekturelementes relativ zu den beiden Kippspiegelmatrizen weniger kritische Justiertoleranzen aufweist.

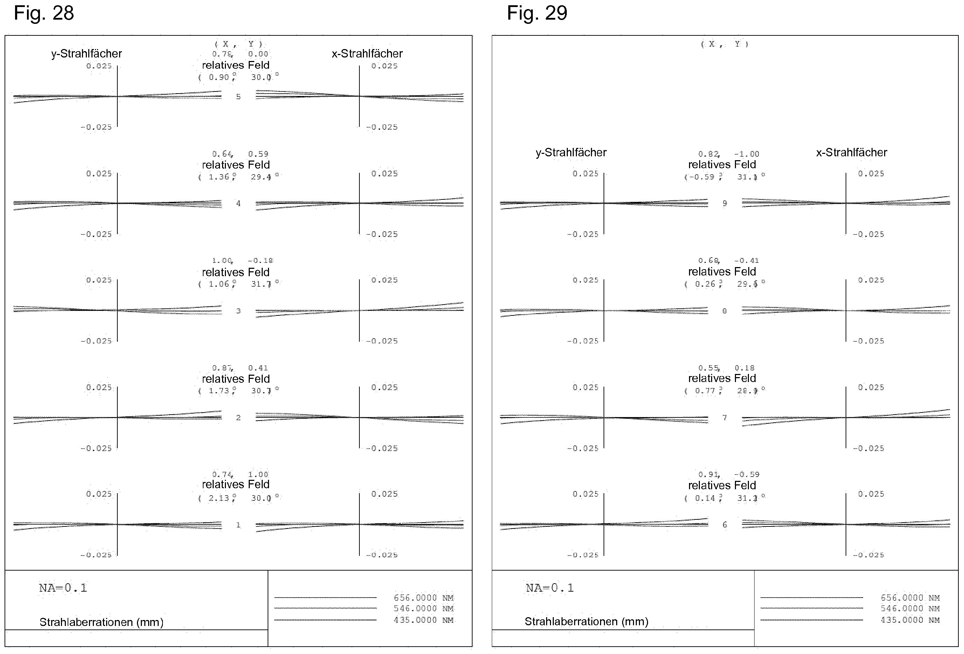

Mit dieser Ausbildung der Abbildungsoptik 4 kann eine Korrektur der von den Deckgläsern induzierten Aberration auf ein praktisch beugungsbegrenztes Niveau durchgeführt werden, wie den Bildfehlerdarstellungen in Fig. 28 und 29 zu entnehmen ist. Auch ist eine pixelgenaue Verzeichnungskorrektur möglich.

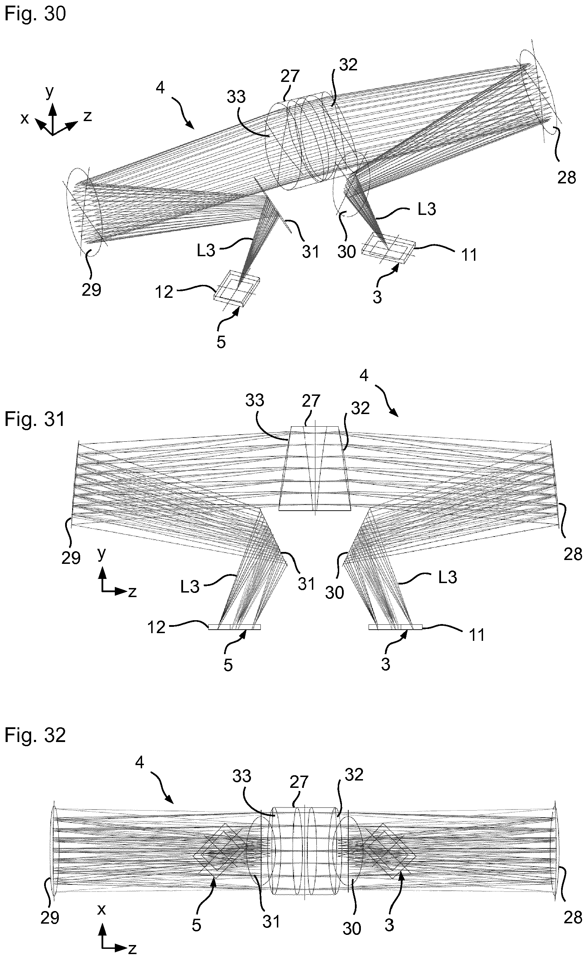

In Figuren 30-32 ist eine weitere nicht erfindungsgemäße Ausbildung der Abbildungsoptik 4 gezeigt, die von dem bisherigen Offner-Aufbau abweicht. Man kann sich vorstellen, daß diese Ausbildung durch Auffalten eines Offner-Systems um den Sekundärspiegel entsteht, der dabei entfällt. Anstelle des Sekundärspiegels steht ein keilförmiges Korrekturelement 27, das zusammen mit den Freiformspiegeln 28 und 29 die Korrekturen der Abbildung übernimmt. Die eigentliche Abbildung erfolgt nur durch die beiden Freiformspiegel 28 und 29, die in einem Offner-System dem Primärspiegel entsprechen. Die beiden planen Umlenkspiegel 30 und 31 dienen nur dazu, die beiden Modulatoren 3, 5 räumlich getrennt anbringen zu können. Somit sind die Krümmungen der beiden Freiformspiegel 28 und 29 identisch. Gleiches gilt für die beiden brechenden Freiformflächen 32 und 33 des Korrekturelementes 27. Um Farbfehler zu reduzieren, ist das Korrekturelement 27 als achromatisierte Kittgruppe ausgelegt.

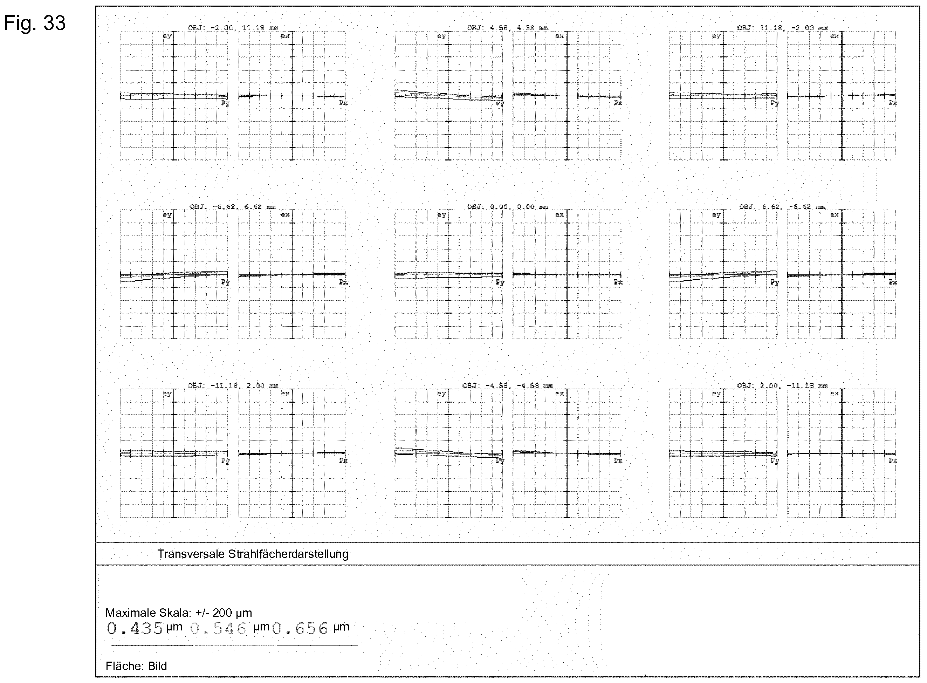

Auch mit diesem Aufbau lassen sich ausgezeichnete Aberrationskorrekturen und eine pixelgenaue Abbildung realisieren, wie den Bildfehlerdarstellungen in Fig. 33 entnommen werden kann.

Merkmale der beschriebenen Ausführungsformen oder die beschriebenen Ausführungsformen können auch miteinander kombiniert werden.

Bei der bisherigen Beschreibung wird davon ausgegangen, daß der Beleuchtungsmodulator 3 mit weißem Licht beaufschlagt wird. Jedoch ist es auch möglich, daß die Lichtquelle 2 farbiges Licht abgibt. Insbesondere kann sie zeitsequentiell verschiedenfarbiges Licht abgeben, wie z.B. rotes, grünes und blaues Licht. Dann kann in der dem Fachmann bekannten Weise ein mehrfarbiges Bild durch zeitsequentielle Darstellung von roten, grünen und blauen Teilfarbbildern erzeugt werden. Es muß lediglich der Farbwechsel so schnell durchgeführt werden, daß ein Betrachter die zeitlich nacheinander projizierten Teilfarbbilder nicht mehr trennen kann, so daß der Betrachter nur die Überlagerung und somit das mehrfarbige Bild wahrnehmen kann.

Die zeitsequentielle Erzeugung des unterschiedlichfarbigen Beleuchtungslichtes kann in üblicher Art und Weise durchgeführt werden, beispielsweise mittels einem Farbrad 35 (Fig. 1) zwischen der Lichtquelle 2 und dem Beleuchtungsmodulator 3.

Natürlich ist es auch möglich, statt nur eines Beleuchtungsmodulators drei Beleuchtungsmodulatoren vorzusehen, die gleichzeitig mit rotem, grünem und blauem Licht beaufschlagt werden. Das rote, grüne und blaue Ein-Licht der drei Modulatoren wird dann überlagert und das überlagerte Ein-Licht wird mittels der Abbildungsoptik 4 farbselektiv auf drei Bildmodulatoren 5 abgebildet. Die Bildmodulatoren modulieren das jeweilige Farbteilbild, das wiederum überlagert und dann mittels der Abbildungsoptik 6 auf die Projektionsfläche 8 projiziert wird.

Die Überlagerung und Farbtrennung kann mittels dichroitischer Schichten durchgeführt werden. Diese Ausführungsform mit sechs Modulatoren ist natürlich deutlich aufwendiger als die bisher beschriebenen Ausführungsformen. Jedoch kann mit einer solchen Ausführungsform ein helleres Farbbild erzeugt werden.

**Patentansprüche**

1. Projektionsvorrichtung mit
    einer ersten und einer zweiten Kippspiegelmatrix (3, 5), die jeweils eine Mehrzahl von Kippspiegeln (K3, K5) und ein die Kippspiegel (K3, K5) überdeckendes Deckglas (11, 12) aufweisen,
    einer Abbildungsoptik (4), die eine Relays-Optik (35), die die Kippspiegel (K3) der ersten Kippspiegelmatrix (3) auf die Kippspiegel (K5) der zweiten Kippspiegelmatrix (5) und somit von Kippspiegeln (K3) der ersten Kippspiegelmatrix (3) reflektiertes Licht auf Kippspiegel (K5) der zweiten Kippspiegelmatrix (5) abbildet, aufweist,
    und einer Projektionsoptik (6), die von Kippspiegel (K5) der zweiten Kippspiegelmatrix (5) reflektiertes Licht projiziert, um ein Bild zu erzeugen,

wobei die Abbildungsoptik (4) ferner ein refraktives Korrekturelement (18, 20) aufweist, das zumindest einen Bildfehler, der durch das schräge Durchlaufen des Lichtes durch die Deckgläser (11, 12) bedingt ist, korrigiert,
**dadurch gekennzeichnet, dass**
die Relays-Optik (35) einen Spiegel mit einer gekrümmten Spiegelfläche aufweist, die durch eine verspiegelte Seite des refraktiven Korrekturelementes (18, 20) gebildet ist.

2. Projektionsvorrichtung nach Anspruch 1, bei der die Relays-Optik (35) als monozentrische Optikeinheit ausgebildet ist.

3. Projektionsvorrichtung nach Anspruch 1 oder 2, bei der die Relays-Optik (35) eine optische Achse aufweist, die Mittelpunkte der Kippspiegel (K3, K5) jeder Kippspiegelmatrix (3, 5) jeweils in einer DMD-Ebene (9, 10) liegen und die Kippspiegelmatrizen (3, 5) so positioniert sind, dass die DMD-Ebenen (9, 10) mit der optischen Achse jeweils einen Winkel von ungleich 90° einschließen.

4. Projektionsvorrichtung nach Anspruch 3, bei der die beiden Kippspiegelmatrizen (3, 5) so positioniert sind, dass die beiden DMD-Ebenen (9, 10) zusammenfallen.

5. Projektionsvorrichtung nach einem der obigen Ansprüche, bei der das Korrekturelement (18, 20) eine gekrümmte Fläche aufweist, die als Freiformfläche ausgebildet ist, deren Krümmung in zwei senkrecht zueinander verlaufenden Schnitten unterschiedlich verläuft und sich abhängig von der Position auf der Fläche ändert.

6. Projektionsvorrichtung nach einem der obigen Ansprüche, bei der das refraktive Korrekturelement (18, 20) so positioniert ist, dass es von dem von der ersten auf die zweite Kippspiegelmatrix (3, 5) abgebildeten Licht genau zweimal durchlaufen wird.

7. Projektionsvorrichtung nach einem der obigen Ansprüche, bei der die Relays-Optik (35) einen Primärspiegel (13) mit konkaver sphärischer Spiegelfläche und einen Sekundärspiegel (14) mit konvexer sphärischer Spiegelfläche aufweist.

8. Projektionsvorrichtung nach einem der obigen Ansprüche, bei der die Relays-Optik (35) als katadioptrische Optik ausgebildet ist.

9. Projektionsvorrichtung nach einem der obigen Ansprüche, bei der die Relays-Optik (35) spiegelsymmetrisch zu genau einer Symmetrieebene ausgebildet ist.

**Claims**

1. Projection device with
a first and a second tilting mirror matrix (3, 5), which each have a plurality of tilting mirrors (K3, K5) and a cover glass (11, 12) covering the tilting mirrors (K3, K5),
an imaging lens system (4), which has a relay lens system (35) which images the tilting mirrors (K3) of the first tilting mirror matrix (3) onto the tilting mirrors (K5) of the second tilting mirror matrix (5) and thus light reflected by tilting mirrors (K3) of the first tilting mirror matrix (3) onto tilting mirrors (K5) of the second tilting mirror matrix (5),
and a projection lens system (6), which projects light reflected by tilting mirrors (K5) of the second tilting mirror matrix (5), in order to produce an image,
wherein the imaging lens system (4) further has a refractive correction element (18, 20) which corrects at least one image error caused by the light obliquely passing through the cover glasses (11, 12),
**characterized in that**
the relay lens system (35) has a mirror with a curved mirror surface which is formed by a reflective side of the refractive correction element (18, 20).

2. Projection device according to claim 1, in which the relay lens system (35) is formed as a monocentric optics unit.

3. Projection device according to claim 1 or 2, in which the relay lens system (35) has an optical axis, the central points of the tilting mirrors (K3, K5) of each tilting mirror matrix (3, 5) each lie in one DMD plane (9, 10) and the tilting mirror matrices (3, 5) are positioned such that the DMD planes (9, 10) in each case enclose an angle not equal to 90° with the optical axis.

4. Projection device according to claim 3, in which the two tilting mirror matrices (3, 5) are positioned such that the two DMD planes (9, 10) coincide.

5. Projection device according to any of the above claims, in which the correction element (18, 20) has a curved surface, which is formed as a free-form surface, the curvature of which runs differently in two sections running perpendicular to one another and changes depending on the position on the surface.

6. Projection device according to any of the above claims, in which the refractive correction element (18, 20) is positioned such that it is passed through precisely twice by the light imaged from the first tilting mirror matrix (3) onto the second tilting mirror matrix (5).

7. Projection device according to any of the above claims, in which the relay lens system (35) has a primary mirror (13) with a concave spherical mirror surface and a secondary mirror (14) with a convex spherical mirror surface.

8. Projection device according to any of the above claims, in which the relay lens system (35) is formed as a catadioptric lens system.

9. Projection device according to any of the above claims, in which the relay lens system (35) is formed mirror-symmetrical to precisely one symmetry plane.


**Revendications**

1. Dispositif de projection comprenant
   des première et deuxième matrices de miroirs basculants (3, 5) qui comportent chacune une pluralité de miroirs basculants (K3, K5) et un verre de recouvrement (11, 12) recouvrant les miroirs basculants (K3, K5),
   une optique de formation d'image (4) qui comporte une optique relais (35) qui forme une image des miroirs basculants (K3) de la première matrice de miroirs basculants (3) sur les miroirs basculants (K5) de la deuxième matrice de miroirs basculants (5) et ainsi, de la lumière réfléchie par les miroirs basculants (K3) de la première matrice de miroirs basculants (3) sur les miroirs basculants (K5) de la deuxième matrice de miroirs basculants (5),
   et une optique de projection (6) qui projette la lumière réfléchie par des miroirs basculants (K5) de la deuxième matrice de miroirs basculants (5) afin de générer une image,
   dans lequel l'optique de formation d'image (4) comporte en outre un élément de correction réfractant (18, 20) qui corrige au moins un défaut d'image provoqué par le passage oblique de la lumière à travers les verres de recouvrement (11, 12),
   **caractérisé en ce que**
   l'optique relais (35) comporte un miroir présentant une surface de miroir incurvée qui est formée par une face réfléchissante de l'élément de correction réfractant (18, 20) .

2. Dispositif de projection selon la revendication 1, dans lequel l'optique relais (35) est réalisée sous la forme d'une unité optique monocentrique.

3. Dispositif de projection selon la revendication 1 ou 2, dans lequel l'optique relais (35) présente un axe optique, les centres des miroirs basculants (K3, K5) de chaque matrice de miroirs basculants (3, 5) se situent chacun dans un plan DMD (9, 10) et les matrices de miroirs basculants (3, 5) sont positionnées de telle manière que les plans DMD (9, 10) forment chacun un angle différent de 90° avec l'axe optique.

4. Dispositif de projection selon la revendication 3, dans lequel les deux matrices de miroirs basculants (3, 5) sont positionnées de telle manière que les deux plans DMD (9, 10) coïncident.

5. Dispositif de projection selon l'une des revendications précédentes, dans lequel l'élément de correction (18, 20) présente une surface incurvée qui est réalisée sous la forme d'une surface de forme libre dont la courbure évolue différemment dans deux parties s'étendant perpendiculairement l'une à l'autre et varie en fonction de la position sur la surface.

6. Dispositif de projection selon l'une des revendications précédentes, dans lequel l'élément de correction réfractant (18, 20) est positionné de telle manière qu'il soit traversé exactement deux fois par la lumière dont l'image est formée par la première matrice de miroirs basculants (3, 5).

7. Dispositif de projection selon l'une des revendications précédentes, dans lequel l'optique relais (35) comporte un miroir primaire (13) présentant une surface réfléchissante sphérique concave et un miroir secondaire (14) présentant une surface réfléchissante sphérique convexe.

8. Dispositif de projection selon l'une des revendications précédentes, dans lequel l'optique relais (35) est réalisée sous la forme d'une optique catadioptrique.

9. Dispositif de projection selon l'une des revendications précédentes, dans lequel l'optique relais (35) est réalisée de manière symétrique dans un miroir par rapport à exactement un plan de symétrie.

Fig. 1

Fig. 2

Fig. 3

35
15
4
L3
14
L3
12
5
11
3

Fig. 4

11
3
16
17  14  18  19
4
15  13
35

Fig. 5

13
5
11
3
16  17
19  14
4
15
35
13

Fig. 7

Fig. 6

Fig. 9

Fig. 8

Fig. 10

Fig. 11

Fig. 12

EP 2 711 761 B1

Fig. 14

Fig. 13

18

EP 2 711 761 B1

Fig. 18

Fig. 19

19

Fig. 15

35

15

4

L3

y
x    z

14

L3

12

5

11

3

21

22

13

20

Fig. 16

4

20

22

15

16

11

3

17   14   18   19

35

13

y
z

Fig. 17

15

13

5

4

16   17

11

19   14

3

x
z

35

13

Fig. 20

Fig. 21

Fig. 22

# Fig. 23

y-Strahlfächer     ( X , Y )   0.78, 0.00     x-Strahlfächer
relatives Feld
(-0.04 °, 24.1 °)

0.64, 0.59
relatives Feld
(-0.09 °, 24.1 °)

1.00, -0.18
relatives Feld
( 0.17 °, 24.1 °)

0.97, 0.41
relatives Feld
( 0.03 °, 24.1 °)

0.74, 1.00
relatives Feld
(-0.04 °, 24.1 °)

NA=0.1

Strahlaberrationen (mm)

656.0000 NM
546.0000 NM
435.0000 NM

# Fig. 24

( X , Y )

y-Strahlfächer     0.82, -1.00     x-Strahlfächer
relatives Feld
(-0.01 °, 24.1 °)

0.68, -0.41
relatives Feld
(-0.09 °, 24.1 °)

0.55, 0.18
relatives Feld
(-0.12 °, 24.1 °)

0.91, -0.59
relatives Feld
( 0.06 °, 24.1 °)

NA=0.1

Strahlaberrationen (mm)

656.0000 NM
546.0000 NM
435.0000 NM

EP 2 711 761 B1

Fig. 29

Fig. 28

EP 2 711 761 B1

Fig. 25

35

4

26

L3

y
x   z

12

5

14

L3

11

3

23

13

Fig. 26

4

35

11

3

y
z

23

14

13

Fig. 27

13

13

5

x   4
z

26

11

3

14

23

35

24

Fig. 30

Fig. 31

Fig. 32

Fig. 33

Transversale Strahlfächerdarstellung

Maximale Skala: +/- 200 µm

0.435 µm  0.546 µm  0.656 µm

Fläche: Bild